# EUROPEAN PATENT APPLICATION

(11) **EP 4 572 329 A1**
(43) Date of publication of application: **18.06.2025**
(21) Application number: 24214427.7
(22) Date of filing: 21.11.2024
(51) Int. Cl.: H04R 1/10, H04R 3/12, H04R 5/033, H04R 5/04, H04W 4/80, H02J 7/00

(54) **OPERATION TIME OPTIMIZATION SYSTEM FOR CONNECTED AUDIO DEVICES AND METHOD THEREOF**

(30) Priority: 11.12.2023 CN 202311694226
(71) Applicant: Harman International Industries, Inc., Stamford, Connecticut 06901 (US)
(72) Inventor: XIANG, Pei, Guangdong, 518067 (CN); LIANG, Tieyi, Guangdong, 518067 (CN); ZHONG, Bo, Guangdong, 518067 (CN)
(74) Representative: Kraus & Lederer PartGmbB

(57) **Abstract**

On the one hand, an audio device capable of optimizing operation time of a system and a system connecting a plurality of the audio devices to form the system to optimize the operation time are provided. On the other hand, a method for optimizing operation time of a system connected to audio devices is provided. The provided audio device, system, and method for operation time optimization can achieve the maximum playback time of the entire system by using power consumption condition information of each device as a reference.

## Description

### TECHNICAL FIELD

The present inventive subject matter relates generally to operation of audio devices, and more particularly to an audio device connected to an operation time optimization system, an operation time optimization system connecting audio devices, and a method thereof.

### BACKGROUND

Using battery-powered audio devices to form a multi-device connection to achieve audio playback experience is a new technology. As a modern integrated entertainment system, for example, a sound system that implements a surround sound effect by using a speaker system in which a plurality of speakers are connected and work in coordination is becoming increasingly popular. This surround sound system may use portable loudspeaker boxes and a wireless connection solution to transmit audio signals, thereby reducing unnecessary external wiring and achieving an ideal multi-speaker multi-space surround sound effect.

However, due to the inclusion of many battery-powered speakers as components, in this multi-device system, when one or a plurality of the speakers run out of power, the system will have to accept the exit of the device and recompute works of other devices, and the entire system may need to be paused, resulting in a poor user listening experience.

Therefore, power consumption by multiple parties becomes an important factor limiting the continuous operation of a multi-device system. A system for optimizing operation time of a plurality of connected audio devices and a method thereof are required, so as to achieve the maximum playback time of the entire system by using power condition information of each device as a reference.

### SUMMARY OF THE INVENTION

According to one aspect of the present inventive subject matter, an audio device connected to an operation time optimization system is provided. The system includes at least two audio devices, including a primary audio device and at least one secondary audio device. Each audio device includes a processor, and its processor is configured to measure power condition of the audio device itself and send power condition information to the primary audio device, and listen for a reconfiguration message from the primary audio device. The processor of each audio device is further configured to receive, when the audio device is a primary audio device, the power condition information sent by each of the at least two audio devices in the system, determine whether to replace another secondary audio device with the primary audio device, and send, if it is determined to replace the primary audio device with another secondary audio device, the reconfiguration message and perform a reconfiguration operation, and perform, when the audio device is a secondary audio device, the reconfiguration operation after the reconfiguration message sent from the primary audio device is listened for.

According to another aspect of the present inventive subject matter, an operation time optimization system including at least two audio devices connected is provided, and the system includes a primary audio device and at least one secondary audio device. Each of the at least two audio devices connected in the system is configured to measure power condition of itself and send power condition information to the primary audio device in the at least two audio devices, and listen for a reconfiguration message from the primary audio device. In the system, the primary audio device is further configured to receive the power condition information sent by each of the at least two audio devices, determine whether to replace another secondary audio device with the primary audio device, and send, if it is determined to replace the primary audio device with another secondary audio device, the reconfiguration message and perform a reconfiguration operation. In the system, the secondary audio device is further configured to perform the reconfiguration operation after the reconfiguration message sent from the primary audio device is listened for.

According to still another aspect of the present inventive subject matter, a method for optimizing operation time of a system having at least two audio devices connected is provided. The method includes performing, by the audio device, the following steps: measuring power condition of the audio device itself and sending power condition information to a primary audio device in the at least two audio devices, and listening for a reconfiguration message from the primary audio device. The method further includes receiving, when the audio device is a primary audio device, the power condition information sent by each of the at least two audio devices in the system, determining whether to replace another secondary audio device with the primary audio device, and sending, if it is determined to replace the primary audio device with another secondary audio device, the reconfiguration message and performing a reconfiguration operation, and performing, when the audio device is a secondary audio device, the reconfiguration operation after the reconfiguration message sent from the primary audio device is listened for.

According to yet another aspect of the present inventive subject matter, a non-transient computer-readable medium storing instructions is provided, wherein the instructions, when executed by one or a plurality of processors, cause the one or a plurality of processors to perform the method for optimizing operation time of a system having at least two audio devices connected provided by the present inventive subject matter.

### BRIEF DESCRIPTION OF THE DRAWINGS

These and/or other features, aspects, and advantages of the present invention will be better understood upon reading the following detailed description with reference to the accompanying drawings, where the same characters represent the same parts throughout these accompanying drawings.
FIG. 1 shows a structural block diagram of an operation time optimization system to which audio devices have been connected according to one or a plurality of embodiments of the present inventive subject matter, wherein the system shown includes, for example, six audio devices; and
FIG. 2 shows a flowchart of a method for optimizing operation time of a system having audio devices connected according to one or a plurality of embodiments of the present inventive subject matter.

### DETAILED DESCRIPTION

The following description of various embodiments is presented for the purpose of illustration, but is not intended to be exhaustive or to limit the disclosed embodiments. Many modifications and variations will be apparent to those of ordinary skill in the art without departing from the scope and spirit of the described embodiments.

In daily life, a stereo speaker system in which a plurality of speakers are connected and work in coordination to reproduce a live sound scene has become very common. For example, in a stereo audio system to which a plurality of speakers, such as Harman OneOS platform speakers, are connected, many of the speakers are battery powered and included as components. When one of the speakers runs out of power, the entire system may need to pause and recompute individual channel configurations, resulting in a poor listening experience for a user.

In order to achieve the maximum playback time for the entire system, the present inventive subject matter provides an operation time optimization system for connected audio devices, and the system includes at least two audio devices. These audio devices intelligently manage power consumption by constantly monitoring power conditions of the various connected audio devices, and then attempt to achieve the maximum playback time for the entire system by using power condition information of each device as a reference, thereby extending the operation time of the entire system with the user being almost unaware.

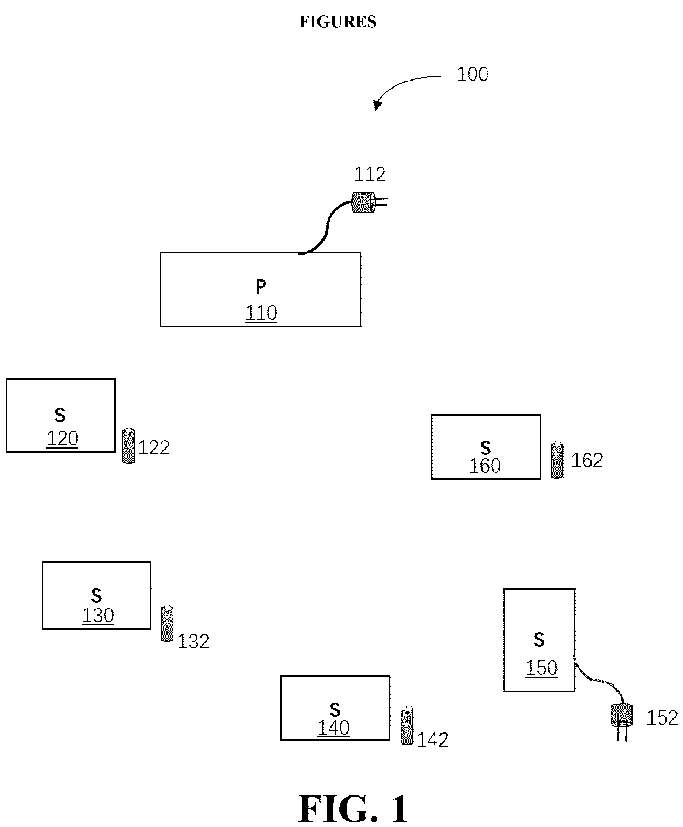

FIG. 1 shows a structural block diagram of an operation time optimization system 100 to which audio devices have been connected according to one or a plurality of embodiments of the present inventive subject matter, wherein an application scenario of wirelessly connecting a plurality of audio devices to the system is graphically shown. As shown in FIG. 1, the system 100 may be a multi-channel system including six audio devices 110, 120, 130, 140, 150, and 160 wirelessly connected to each other.

One or a plurality of processors (not shown) may be included in each audio device. The processor may be implemented as a microprocessor, a microcontroller, an application specific integrated circuit (ASIC), a digital signal processor (DSP), discrete logic, or a combination of these and/or other types of circuits or logic. By configuring the processor, the audio device can be intelligently configured as a primary audio device or a secondary audio device to perform various operations.

In the example of the audio system 100 composed of a plurality of audio devices shown in FIG. 1, the audio device 110 may be used as a primary audio device to complete heavy computing and other intelligent tasks such as decoding and transmission, for example, the primary audio device 110 marked as **"P"** in FIG. 1. The remaining audio devices 120, 130, 140, 150, and 160 are mainly used to receive an audio source to be played back and playback it, and therefore, they serve as secondary audio devices and are marked as **"S"** in FIG. 1, respectively. Due to the computational load, the primary audio device usually has a large power consumption, and the power consumption efficiencies of the various secondary audio devices may be different.

The audio devices connected in the system may each adopt a different power supply method. For example, in the example shown in FIG. 1, the primary audio device 110 adopts a power supply method of being plugged into a wall power supply 112, and it can be seen that the secondary audio device 150 also adopts a power supply method of being plugged into a wall power supply 152, while the other secondary audio devices 120, 130, 140, and 160 are powered by batteries 122, 132, 142, and 162 respectively. The power supply methods of various devices may be selected according to actual on-site environmental conditions and device configurations. For example, in another example, the audio devices connected to the system may all consist of battery-powered portable audio devices, thereby enabling the system to be portable and flexible enough to adapt to different sites.

It is conceivable that the number of the plurality of audio devices connected to the system is not fixed. In one instance, the audio devices may be, for example, speakers constituting a home theater system, for example, a plurality of speakers for reproducing a multi-channel effect that are connected in a sound system such as Dolby 5.1 or 7.1. In another instance, these audio devices may be a group of speaker devices distributed in different rooms or spaces, or the like.

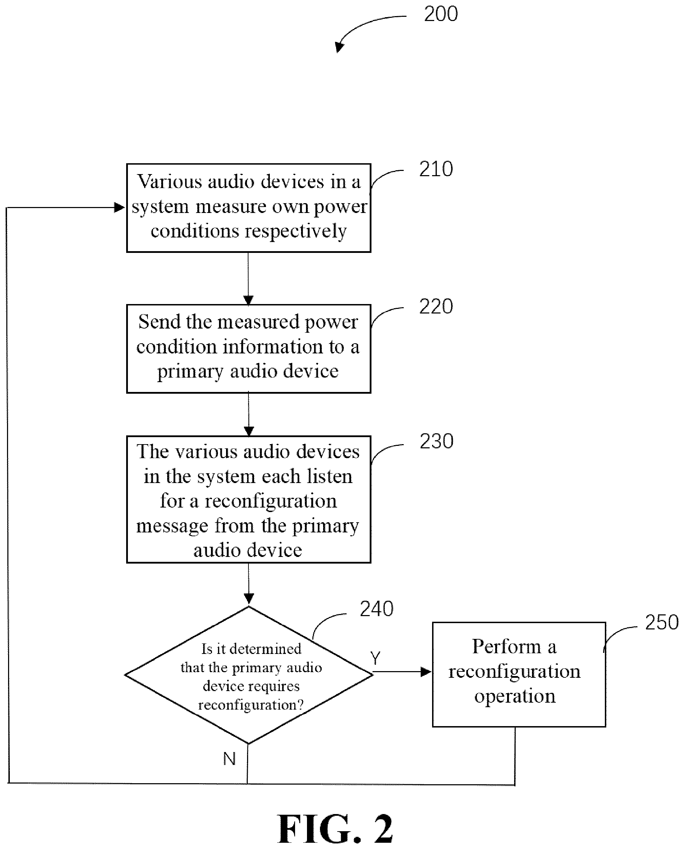

FIG. 2 shows a flowchart of a method 200 for optimizing operation time of a system having audio devices connected according to one or a plurality of embodiments of the present inventive subject matter.

In the method 200 shown in FIG. 2, first, as shown in a step 210, the system has been in operation, wherein a plurality of audio devices connected may each measure and estimate their current power conditions. Referring to the system 100 shown in FIG. 1, at a specific time interval, for example, every 30 seconds, each of the audio devices 110, 120, 130, 140, 150, and 160 connected to the system reports its power condition to the primary audio device 110, wherein the primary audio device 110 itself will also learn its own power condition from the report from the primary audio device 110. For example, each audio device may be provided with a power meter, and the power meter may measure its own power condition with an accuracy of 1%. Additionally, the accuracy of measuring the power condition in an audio device without a power meter may be around 2% to 5%. In addition, based on the measured power condition and past power performance, each audio device may also estimate the remaining playback time of the audio device itself, and may send, for example, the measured power condition and/or the estimated remaining playback time as power condition information to the primary audio device.

In a step 220, each of the audio devices 110, 120, 130, 140, 150, and 160 connected to the system may embed the power condition information as metadata into the report and send it to the primary audio device 110 via existing connection channels and protocols. These connection protocols may include, but are not limited to, Bluetooth, Wi-Fi, NFC, Sparklink, HTTP, UPnP, Zigbee, Matter, MQTT, CoAP, AMQP, WebSocket, any other possible future connection protocols, or the like.

After each of the audio devices 110, 120, 130, 140, 150, and 160 connected to the system reports its own power condition information to the primary audio device 110 (or in parallel with a reporting cycle), each of the audio devices 110, 120, 130, 140, 150, and 160 is further configured to listen for a message from the primary audio device 110. When the primary audio device determines that the system needs to be reconfigured, each audio device responds differently depending on the new configuration, as described in a step 230.

After the primary audio device 110 receives the power condition information sent from each of the audio devices 110, 120, 130, 140, 150, and 160 connected to the system, the primary audio device 110 is configured to perform computations to determine whether a new primary audio device should be set to replace itself, as described in a step 240.

In the step 240, a simple rule for the primary audio device to perform computation and determination may be, for example, using the audio device having the longest remaining playback time among the audio devices connected to the system as the primary audio device.

Referring to the example shown in FIG. 1, the primary audio device 110 has been plugged into a wall power source, and the primary audio device 110 may be considered to have an unlimited playback time, so the primary audio device 110 should always operate as a primary audio device without being replaced. Therefore, the primary audio device 110 may determine that it is not necessary to reconfigure a new primary audio device, and the method returns to the step 210, and the various audio devices continue to measure and report their own power conditions in the next time interval.

Additionally or alternatively, if the battery power condition of the current primary audio device 110 is the highest among all the audio devices connected to the system, or the primary audio device 110 has the longest estimated remaining playback time, the primary audio device 110 may also determine that the primary audio device 110 still serves as the primary audio device and does not need to be replaced. Therefore, the primary audio device 110 may determine that it is not necessary to reconfigure a new primary audio device, and the method returns to the step 210, and the various audio devices continue to measure and report their own power conditions in the next time interval.

In one example, if the primary audio device is powered, for example, by a battery and the battery of the primary audio device is about to run out, in the step 240, the primary audio device may determine that a new primary audio device will need to be determined to replace the current primary audio device to complete heavy computations such as decoding and/or transmission and other intelligent tasks. In this case, the audio devices need to be coordinated with the entire system and reconfigured appropriately. At this point, the primary audio device determines, from among the other secondary audio devices, a secondary audio device that will take over the current primary audio device, and the procedure proceeds to a step 250 to perform a reconfiguration operation. Ideally, the user should not notice that the primary audio device has been changed or another reconfiguration operation has been performed on the audio devices he/she is currently using.

In another example, an entire system in which all connected audio devices are battery-powered may be designed so that each audio device in the system takes turns serving as the primary audio device, and therefore, the group of audio devices applies battery power in a balanced manner, even if the battery of the primary audio device is not close to being depleted. In the example, the primary audio device may sequentially determine the secondary audio device that replaces the primary audio device in a certain order, and then make the secondary audio device take over as a primary audio device and continue to work for a period of time. Under such a design strategy, the power conditions of the various audio devices connected to the system may basically remain relatively balanced, and the power differences between them will not be too large. For example, the order of replacing the primary audio device in the secondary audio devices may be in accordance with the order of arrangement positions of the audio devices in FIG. 1, such as in a clockwise or counterclockwise order. For another example, the audio device with the highest power among the secondary audio devices may replace the primary audio device after a fixed period of time. Therefore, in the step 240, the primary audio device determines, from other secondary audio devices, the secondary audio device that will replace the current primary audio device based on the relatively balancing power conditions among the audio devices connected to the system, and then the procedure proceeds to the step 250 to perform the reconfiguration operation.

Next, in the step 250, the primary audio device sends a corresponding reconfiguration message to each of the audio devices connected to the system, informing the respective audio devices of reconfiguration settings of the system to perform corresponding reconfiguration operations. In one example, the reconfiguration is determined by the primary audio device, and the primary audio device may only send the reconfiguration message to each of the secondary audio devices. After listening for the corresponding reconfiguration messages, the related secondary audio devices may perform various reconfiguration operations according to their respective different configurations to replace the current primary audio device to become new primary audio devices, or different reconfiguration operations may be performed in the entire system for adjustment.

The various reconfiguration operations in the step 250 may include, but are not limited to, for example:
a. Smooth transition: In order to maintain a transparent user experience, the selected secondary audio device taking over the current primary audio device may be designed to be a smooth transition. For example, during the conversion process, both the original primary audio device and the new primary audio device may decode multi-channel audio content simultaneously until the new primary audio device completely takes over and can stably separate and send audio streams to the various secondary audio devices as a primary audio device;
b. Volume change: If the entire system needs to extend the playback time, the primary audio device may determine the volume on each audio device and reduce the volume appropriately to save power consumption;
c. Spectrum change: If the remaining battery power of a certain audio device is extremely low, the primary audio device may decide to transfer some low-frequency information of the audio device to other audio devices (with longer remaining playback time) to reduce the burden on the audio device with lower battery power. As can be seen in such an example, more than one primary audio device may be set in the system to jointly perform or share power-intensive and computationally intensive functions.

In general, the design of reconfiguration operations in an audio system should aim at maximizing the playback time of the entire system, and the user should not notice that the primary audio device has been changed or another reconfiguration operation has been performed on the audio devices he/she is currently using.

In one or a plurality of embodiments of the present inventive subject matter, the audio devices connected to the system may not be limited to audio devices such as speakers, but may also be any devices that contribute to the overall system experience, such as headphones.

In one or a plurality of embodiments of the present inventive subject matter, in order to enable the user to understand the power conditions of these audio devices, a user interface may also be provided and designed to provide visual feedback to the user, and sometimes prompt the user to perform operations, for example:
1. For devices such as a receiver and a sound bar that can be connected to a TV, a TV screen may be used as a display to show the power level of each device and its relative position;
2. The estimated remaining playback time may also be displayed; and
3. When a device with a low battery level could have a significant impact on the overall experience, certain reminder sounds or reminder light patterns may be displayed on the device to encourage the user to charge it.

Additionally or alternatively, the steps of the method 200 for optimizing operation time of connected audio devices as shown in FIG. 2 may be implemented by one or a plurality of processors. Similarly, instructions for implementing the method 200 for optimizing operation time of connected audio devices as shown in FIG. 2 may be stored in a memory, and the memory may be a DRAM, an SRAM, a flash memory, or another type of memory. Parameters (for example, conditions and thresholds) and other data structures may be stored and managed separately, may be combined into a single memory or database, or may be logically and physically organized in a number of different ways. Programs and instruction sets may be parts of a single program, or they may be separate programs, or distributed across a plurality of memories and processors.

The audio device, system, and method for operation time optimization provided by the present inventive subject matter may achieve the maximum playback time of the entire system by taking power condition information of each device as a reference. Those skilled in the art will appreciate that the apparatuses, systems, and methods mentioned herein should broadly cover the experience of all related systems, rather than being limited to the well-known multi-space, multi-room, or multi-channel audio system settings. Primary and secondary mentioned herein are metaphorical names of the devices used only to explain the concepts, and the actual labels on the devices may vary. For ease of explanation, one or a plurality of embodiments herein use an example including one primary audio device and several secondary audio devices; however, the numbers of these devices are not fixed, and the numbers of primary devices and secondary devices may be expanded. The current power conditions listed herein may be simply described as a percentage of remaining battery, playback time, and the like, but the concept of these conditions may also be expanded to include any indicators that contribute to the remaining stored energy of the device.

Examples of one or a plurality of implementations of the present inventive subject matter are described in the following clauses:
Clause 1. An audio device connected to an operation time optimization system, wherein the system includes at least two audio devices, including a primary audio device and at least one secondary audio device, and the audio device includes:
   a processor, wherein the processor is configured to:
   measure power condition of the audio device itself and send power condition information to the primary audio device;
   listen for a reconfiguration message from the primary audio device;
   receive, when the audio device is a primary audio device, the power condition information sent by each of the at least two audio devices, determine whether to replace another secondary audio device with the primary audio device, and send, if it is determined to replace the primary audio device with another secondary audio device, the reconfiguration message and perform a reconfiguration operation; and
   perform, when the audio device is a secondary audio device, the reconfiguration operation after the reconfiguration message sent from the primary audio device is listened for.
Clause 2. The audio device according to clause 1, wherein the power condition includes an estimated remaining playback time.
Clause 3. The audio device according to clause 1 or clause 2, wherein the processor is configured to determine, when the audio device is the primary audio device, each of the at least two audio devices to be a primary audio device in turn based on the relatively balancing power conditions between the at least two audio devices.
Clause 4. The audio device according to any one of clauses 1 to 3, wherein the processor is configured to, replace, when the audio device is a primary audio device, the primary audio device with the another secondary audio device from the at least one secondary audio device based on the primary audio device being about to run out of power.
Clause 5. The audio device according to any one of clauses 1 to 4, wherein the processor is configured to replace, when the audio device is a primary audio device, the primary audio device with the another secondary audio device having the longest remaining playback time among the at least two audio devices.
Clause 6. The audio device according to any one of clauses 1 to 5, wherein the processor is configured to perform, when the audio device is a secondary audio device, the reconfiguration operation to replace the primary audio device after the reconfiguration message from the primary audio device is listened for.
Clause 7. The audio device according to any one of clauses 1 to 6, wherein the reconfiguration operation includes changing the another secondary audio device to a primary audio device in at least one of the following manners: smooth transition, volume change, and spectrum change.
Clause 8. The audio device according to any one of clauses 1 to 7, wherein when the audio device is a secondary audio device, the power condition information is sent to the primary audio device through an existing connection channel and protocol.
Clause 9. The audio device according to any one of clauses 1 to 8, wherein the power condition information is sent as metadata to the primary audio device.
Clause 10. The audio device according to any one of clauses 1 to 3, wherein the protocol includes at least one of the following: Bluetooth, Wi-Fi, NFC, Sparklink, HTTP, UPnP, Zigbee, Matter, MQTT, CoAP, AMQP, and WebSocket.
Clause 11. An operation time optimization system having audio devices connected, wherein the system includes:
   at least two audio devices, including a primary audio device and at least one secondary audio device;
   each of the at least two audio devices being configured to measure power condition of itself and send power condition information to the primary audio device in the at least two audio devices, and listen for a reconfiguration message from the primary audio device;
   wherein the primary audio device is further configured to receive the power condition information sent by each of the at least two audio devices, determine whether to replace another secondary audio device with the primary audio device, and send, if it is determined to replace the primary audio device with another secondary audio device, the reconfiguration message and perform a reconfiguration operation; and
   wherein the secondary audio device is further configured to perform the reconfiguration operation after the reconfiguration message sent from the primary audio device is listened for.
Clause 12. The system according to clause 11, wherein the power condition includes an estimated remaining playback time.
Clause 13. The system according to clause 11 or clause 12, wherein the primary audio device is further configured to determine each of the at least two audio devices to be a primary audio device in turn based on the relatively balancing power conditions between the at least two audio devices.
Clause 14. The system according to any one of clauses 11 to 13, wherein the primary audio device is further configured to replace the primary audio device with the another secondary audio device from the at least one secondary audio device based on the primary audio device being about to run out of power.
Clause 15. The system according to any one of clauses 11 to 14, wherein the primary audio device is further configured to replace the primary audio device with the another secondary audio device having the longest remaining playback time among the at least two audio devices.
Clause 16. The system according to any one of clauses 11 to 15, wherein the secondary audio device is further configured to perform the reconfiguration operation to replace the primary audio device after the reconfiguration message from the primary audio device is listened for.
Clause 17. The system according to any one of clauses 11 to 16, wherein the reconfiguration operation includes changing the another secondary audio device to the primary audio device in at least one of the following manners: smooth transition, volume change, and spectrum change.
Clause 18. The system according to clauses 11 to 17, further including sending, when the audio device is a secondary audio device, the power condition information to the primary audio device through an existing connection channel and protocol.
Clause 19. The system according to any one of clauses 11 to 18, further including sending the power condition information as metadata to the primary audio device.
Clause 20. The system according to any one of clauses 11 to 19, wherein the protocol includes at least one of the following: Bluetooth, Wi-Fi, NFC, Sparklink, HTTP, UPnP, Zigbee, Matter, MQTT, CoAP, AMQP, and WebSocket.
Clause 21. A method for optimizing operation time of a system having at least two audio devices connected, wherein the method includes the following steps performed via each of the audio devices:
   measuring power condition of the audio device itself and sending power condition information to a primary audio device among the at least two audio devices;
   listening for a reconfiguration message from the primary audio device;
   receiving, when the audio device is a primary audio device, the power condition information sent by each of the at least two audio devices, determining whether to replace another secondary audio device with the primary audio device, and sending, if it is determined to replace the primary audio device with another secondary audio device, the reconfiguration message and performing a reconfiguration operation; and
   performing, when the audio device is a secondary audio device, the reconfiguration operation after the reconfiguration message sent from the primary audio device is listened for.
Clause 22. The method according to clause 21, wherein the power condition includes an estimated remaining playback time.
Clause 23. The method according to clause 21 or clause 22, further including determining, when the audio device is a primary audio device, each of the at least two audio devices to be a primary audio device in turn based on the relatively balancing power conditions between the at least two audio devices.
Clause 24. The method according to any one of clauses 21 to 23, further including replacing, when the audio device is a primary audio device, the primary audio device with the another secondary audio device from the at least one secondary audio device based on the primary audio device being about to run out of power.
Clause 25. The method according to any one of clauses 21 to 24, further including replacing, when the audio device is a primary audio device, the primary audio device with the another secondary audio device having the longest remaining playback time among the at least two audio devices.
Clause 26. The method according to any one of clauses 21 to 25, further including performing, when the audio device is a secondary audio device, the reconfiguration operation to replace the primary audio device after the reconfiguration message from the primary audio device is listened for.
Clause 27. The method according to any one of clauses 21 to 26, wherein the reconfiguration operation includes changing the another secondary audio device to the primary audio device in at least one of the following manners: smooth transition, volume change, and spectrum change.
Clause 28. The method according to any one of clauses 21 to 27, further including sending, when the audio device is a secondary audio device, the power condition information to the primary audio device through an existing connection channel and protocol.
Clause 29. The method according to any one of clauses 21 to 28, further including sending the power condition information as metadata to the primary audio device.
Clause 30. The method according to any one of clauses 21 to 29, wherein the protocol includes at least one of the following: Bluetooth, Wi-Fi, NFC, Sparklink, HTTP, UPnP, Zigbee, Matter, MQTT, CoAP, AMQP, and WebSocket.
Clause 31. A non-transient computer-readable medium storing instructions, wherein the instructions, when executed by one or a plurality of processors, cause the one or a plurality of processors to perform the method for optimizing operation time of a system having audio devices connected according to clauses 21 to 30.

The selection of terms used herein is intended to best explain the principles and practical applications of the embodiments or the improvements to technologies found in the market, or to enable other persons of ordinary skill in the art to understand the embodiments disclosed herein.

In the above, reference is made to the embodiments presented in the present disclosure. However, the scope of the present disclosure is not limited to the specifically described embodiments. Rather, any combination of the above features and elements, whether related to different embodiments or not, is contemplated as implementing and practicing the contemplated embodiments.

Furthermore, although the embodiments disclosed herein can achieve advantages better than other possible solutions or better than the prior art, whether a given embodiment achieves specific advantages does not limit the scope of the present disclosure. Therefore, the above aspects, features, embodiments and advantages are merely illustrative and are not considered as elements or limitations of the appended claims unless explicitly recited in the claims.

Although the above content is directed to the embodiments of the present disclosure, other and further embodiments of the present disclosure can be designed without departing from the basic scope of the present disclosure, and the scope of the present disclosure is determined by the appended claims.

## Claims

1. An audio device connected to an operation time optimization system, wherein the system comprises at least two connected audio devices, comprising a primary audio device and at least one secondary audio device, and the audio device comprises:
one or a plurality of processors, wherein the one or a plurality of processors are each configured to:
measure power condition of the audio device itself and send power condition information to the primary audio device;
listen for a reconfiguration message from the primary audio device;
receive, when the audio device is a primary audio device, the power condition information sent by each of the at least two audio devices, determine whether to replace another secondary audio device with the primary audio device, and send, if it is determined to replace the primary audio device with another secondary audio device, the reconfiguration message and perform a reconfiguration operation; and
perform, when the audio device is a secondary audio device, the reconfiguration operation after the reconfiguration message sent from the primary audio device is listened for.

2. The audio device according to claim 1, wherein the power condition comprises an estimated remaining playback time.

3. The audio device according to claim 1 or 2, wherein the one or a plurality of processors are each configured to determine, when the audio device is a primary audio device, at least one of the following:
- that the reconfiguration comprises determining each of the at least two audio devices to be a primary audio device in turn based on the relatively balancing power conditions between the at least two audio devices.
- that the reconfiguration comprises replacing the primary audio device with the another secondary audio device from the at least one secondary audio device based on the primary audio device being about to run out of power.
- that the reconfiguration comprises replacing the primary audio device with the another secondary audio device having the longest remaining playback time among the at least two audio devices.

4. The audio device according to any preceding claim, wherein the one or a plurality of processors are each configured to perform, when the audio device is a secondary audio device, the reconfiguration operation to replace the primary audio device after the reconfiguration message from the primary audio device is listened for and preferably the reconfiguration operation comprises changing the another secondary audio device to a primary audio device in at least one of the following manners: smooth transition, volume change, and spectrum change.

5. The audio device according to any preceding claim, wherein when the audio device is a secondary audio device, the power condition information is sent to the primary audio device through an existing connection channel and protocol.

6. The audio device according to claim 5, wherein the power condition information is sent as metadata to the primary audio device.

7. The audio device according to claim 5 or 6, wherein the protocol comprises at least one of the following: Bluetooth, Wi-Fi, NFC, Sparklink, HTTP, UPnP, Zigbee, Matter, MQTT, COAP, AMQP, and WebSocket.

8. An operation time optimization system having audio devices connected, wherein the system comprises:
at least two audio devices, comprising a primary audio device and at least one secondary audio device;
each of the at least two audio devices is configured to:
measure power condition of itself and send power condition information to the primary audio device; and
listen for a reconfiguration message from the primary audio device;
wherein the primary audio device is further configured to receive the power condition information sent by each of the at least two audio devices, determine whether to replace another secondary audio device with the primary audio device, and send, if it is determined to replace the primary audio device with another secondary audio device, the reconfiguration message and perform a reconfiguration operation; and
wherein the secondary audio device is configured to perform the reconfiguration operation after the reconfiguration message sent from the primary audio device is listened for.

9. The system according to claim 8, wherein the power condition comprises an estimated remaining playback time.

10. The system according to claim 8 or 9, wherein the primary audio device is further configured to at least one of the following:
- determine each of the at least two audio devices to be a primary audio device in turn based on the relatively balancing power conditions between the at least two audio devices.
- replace the primary audio device with the another secondary audio device from the at least one secondary audio device based on the primary audio device being about to run out of power.
- replace the primary audio device with the another secondary audio device having the longest remaining playback time among the at least two audio devices.

11. The system according to any of claims 8 to 10, wherein the secondary audio device is further configured to perform the reconfiguration operation to replace the primary audio device after the reconfiguration message from the primary audio device is listened for an preferably
the reconfiguration operation comprises changing the another secondary audio device to the primary audio device in at least one of the following manners: smooth transition, volume change, and spectrum change.

12. The system according to any of claims 8 to 11, further comprising sending, when the audio device is a secondary audio device, the power condition information to the primary audio device through an existing connection channel and protocol.

13. The system according to claim 12, further comprising sending the power condition information as metadata to the primary audio device.

14. The system according to claim 12 or 13, wherein the protocol comprises at least one of the following: Bluetooth, Wi-Fi, NFC, Sparklink, HTTP, UPnP, Zigbee, Matter, MQTT, COAP, AMQP, and WebSocket.

15. A method for optimizing operation time of a system having at least two audio devices connected, wherein the method comprises the following steps performed via each of the audio devices:
measuring power condition of the audio device itself and sending power condition information to a primary audio device among the at least two audio devices;
listening for a reconfiguration message from the primary audio device;
receiving, when the audio device is a primary audio device, the power condition information sent by each of the at least two audio devices, determining whether to replace another secondary audio device with the primary audio device, and sending, if it is determined to replace the primary audio device with another secondary audio device, the reconfiguration message and performing a reconfiguration operation; and
performing, when the audio device is a secondary audio device, the reconfiguration operation after the reconfiguration message sent from the primary audio device is listened for.

16. The method according to claim 15, wherein the power condition comprises an estimated remaining playback time.

17. The method according to claim 15 or 16, further comprising at least one of the following:, when the audio device is a primary audio device,
- determining each of the at least two audio devices to be a primary audio device in turn based on the relatively balancing power conditions between the at least two audio devices,
- replacing the primary audio device with the another secondary audio device from the at least one secondary audio device based on the primary audio device being about to run out of power,
- replacing the primary audio device with the another secondary audio device having the longest remaining playback time among the at least two audio devices.

18. The method according to any of claims 15 to 17, further comprising performing, when the audio device is a secondary audio device, the reconfiguration operation to replace the primary audio device after the reconfiguration message from the primary audio device is listened forand preferably the reconfiguration operation comprises changing the another secondary audio device to the primary audio device in at least one of the following manners: smooth transition, volume change, and spectrum change.

19. The method according to any of claims 15 to 18, further comprising sending, when the audio device is a secondary audio device, the power condition information to the primary audio device through an existing connection channel and protocol.

20. A non-transient computer-readable medium storing instructions, wherein the instructions, when executed by one or a plurality of processors, cause the one or a plurality of processors to perform the method according to claims 15 to 19.
